# EUROPÄISCHE PATENTSCHRIFT

(11) **EP 1 129 894 B1**
(45) Veröffentlichungstag und Bekanntmachung des Hinweises auf die Patenterteilung: **26.05.2004**
(21) Anmeldenummer: 01103139.0
(22) Anmeldetag: 10.02.2001
(51) Int. Cl.: B60N 2/58

(54) **Verfahren zur kapazitiven Objekterkennung bei Fahrzeugen**
Capacitive object recognition method in vehicles
Procédé de reconnaisance capacitive d'objet pour véhicules

(30) Priorität: 03.03.2000 DE 10010532
(43) Veröffentlichungstag der Anmeldung: 05.09.2001
(73) Patentinhaber: Bayerische Motoren Werke Aktiengesellschaft, 80809 München (DE)
(72) Erfinder: Marschner, Christian, 80803 München (DE); Eisenmann, Lutz, 85256 Vierkirchen (DE); Lu, Yan, Dr., 85356 Freising (DE); Sauer, Sivart, 80935 München (DE)

(56) Entgegenhaltungen:
- EP-A- 0 993 993
- WO-A-97/29391
- WO-A-98/22836
- WO-A-99/59003
- DE-A- 19 547 842
- DE-A- 19 612 626
- US-A- 3 740 567
- US-A- 5 166 679
- US-A- 5 525 843

## Beschreibung

Die Erfindung bezieht sich auf ein Verfahren gemäß der Oberbegriffe der Patentansprüche 1 oder 2.

Derartige Verfahren sind aus verschiedenen Veröffentlichungen, beispielsweise der WO 99/59003 A und der DE 19612626 A bekannt. Im Prinzip sind die beiden i.d.R. plattenförmigen Kondensatoren benachbart zu dem jeweiligen Objekt angeordnet. Zur Belegterkennung für einen Fahrzeugsitz befinden sich die Kondensatoren in der Polsterung des Sitzes und dort beispielsweise im Sitz- und im Lehnenteil. Die Erkennung wird hier dazu verwendet, Sicherheitseinrichtungen wie Airbag und dgl. nur dann auszulösen, wenn der Sitz tatsächlich besetzt ist.

Der WO 9 822 836 wird als nächstliegender Stand der Technik angesehen.

Bei Anwesenheit einer Person ändert sich die Kapazität der Kondensatoren aufgrund der relativ guten Leitfähigkeit des Menschen. Zur Unterscheidung von Person und Kindersitz müssen die Kapazitätswerte beobachtet und durch einen Algorithmus ausgewertet werden.

Der Erfindung liegt die Aufgabe zugrunde, ein Verfahren der eingangs genannten Art zu schaffen, das mit geringem apparativem Aufwand nicht nur eine genaue Aussage über die Anwesenheit eines Objekts, sondern auch darüber liefert, um welches Objekt es sich handelt.

Die Erfindung löst diese Aufgabe sowohl durch die Merkmale des Patentanspruchs 1 als auch durch die des davon unabhängigen Patentanspruchs 2.

Bei der Erfindung werden die Kapazitäten beider Kondensatoren einzeln bestimmt. Beim ersten Verfahren werden zwei Bewertungen mit Hilfe der Wertetabelle abgeleitet und miteinander verglichen, Stimmmen beide Bewertungen in der Art des Objekts überein, wird die Sicherheitseinrichtung bedarfsweise entsprechend gesteuert, d.h. ggf. ausgelöst oder z.B. bei einem Rebound-Kindersitz oder nicht besetztem Sitz, nicht ausgelöst.

Beim zweiten Verfahren werden die beiden Bewertungen miteinander mathematisch in Beziehung gesetzt und aus dem sich aufgrund der mathematischen Beziehung ergebenden Wert wird anhand einer Entscheidungstabelle abgeleitet, ob eine dem Sitz zugeordnete Insassenschutzeinrichtung bedarfsweise aktiviert wird. Die mathematische Beziehung kann vorzugsweise die Bildung des Mittelwerts oder der Summe der beiden Bewertungen sein. Es wird hier nur mit einer Gesamtbewertung gearbeitet.

Wesentlich für beide Verfahren ist, daß der zeitliche Verlauf der Kapazitäten und damit die Aussage über die Art des Objekts verfolgt wird.

Vorteilhafte Ausgestaltungen der Erfindung sind Gegenstand der weiteren Patentansprüche. So kann das Ergebnis der Entscheidung, ob die Insassenschutzeinrichtung bedarfsweise zu aktivieren ist, ebenfalls in seinem zeitlichen Verlauf untersucht wird.

Schließlich kann die Entscheidung, die Insassenschutzeinrichtung bedarfsweise zu aktivieren, erst nach Ablauf einer vorgegebenen Zeit annulliert werden, in der ständig eine das Auslösen der Insassenschutzeinrichtung verhindernde Entscheidung vorliegt.

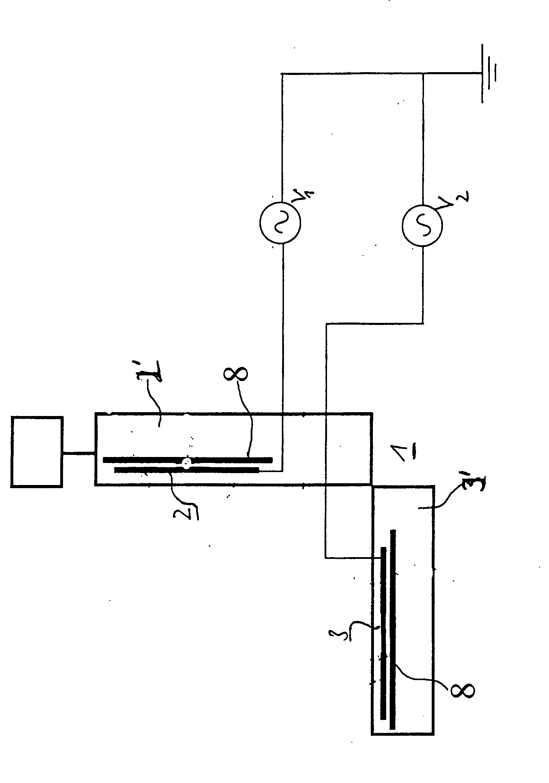

Das erfindungsgemäße Verfahren ist anhand der Zeichnung weiter erläutert. Es zeigt die einzige Figur eine Vorrichtung zur Durchführung der erfindungsgemäßen Verfahren.

In der Figur ist schematisch eine Schaltanordnung in Verbindung mit der konstruktiven Ausgestaltung der Erfindung dargestellt.

In einem schematisch gezeigten Fahrzeugsitz 1 befinden sich Kondensatoren 2 und 3 im Lehnenteil 2' bzw. im Sitzflächenteil 3', die jeweils mit Wechselspannungen V₁ und V₂ beaufschlagt werden. In der Praxis hat sich ein eine Wechselspannungsfrequenz zwischen 10 und 150 kHz, vorzugsweise von 50 kHz als zweckmäßig erwiesen.

Jeder Kondensator 2 und 3 besitzt eine Schirmung in Form einer elektrisch leitenden Platte 8, durch die eine Richtwirkung hin zum Meß-Objekt erzielt wird (vgl. US 5,166,679 A).

Es werden die Kapazitätswerte (C_ext_i, i=1,2) der beiden gleich großen Kondensatoren 2 und 3 bestimmt. Von diesen werden die Werte C_leer_i (i=1,2) des leeren Sitzes abgezogen, die vorab für die verschiedenen Sitztypen ermittelt wurden. Aus diesen zwei Differenzwerten werden die resultierenden C_obj_i verwendet und damit eine Klassifizierung vorgenomnmen.

Alle 500 ms wird ein neuer Satz C_obj_i ermittelt. Mit Hilfe einer Zuordnungstabelle wird aus diesen 2 Werten ebenfalls alle 500 ms die aktuelle Einschätzung (rating) bestimmt, was sich auf dem Sitz befindet. Diese Zuordnungstabelle wird für den jeweiligen Sitztyp vorab anhand von Kapazitätsmessungen für verschiedene Fallgestaltungen (verschiedene Typen und Anordnungen von Kindersitzen, Personen unterschiedlicher Größe und unterschiedlichem Gewicht mit unterschiedlicher Bekleidung und unterschiedlicher Sitzhaltung) ermittelt. Die Zuordnungstabelle liefert bei entsprechender Normierung einen Wert zwischen -1 (Sitz sicher leer) bis +1 (Sitz sicher mit Person besetzt) für jede der beiden Sitzkomponenten 2' und 3'.

Generell deutet eine hohe Kapazität C_obj_i auf eine im Sitz befindliche Person hin. Eine niedrige oder keine Kapazität ist typisch für einen unbelegten oder mit einem besetzten oder nicht besetzten Kindersitz besetzten Fahrzeugsitz. In diesem Fall soll z.B. ein Front-Airbag nicht ausgelöst werden. Bei einer Person mit normaler Sitzhaltung und Bekleidung ergeben sich jeweils hohe, etwa gleichgroße Kapazitäten (ca. 40 pF) an den Kondensatoren 2 und 3.

Durch Bewegungen des Insassen kann das rating stark schwanken. Besonders das rating_lehne kann beim nach vorne beugen sogar negative Werte annehmen und damit dem rating eines Kindersitzes entsprechen. Zusammen mit sehr dicker Bekleidung des Fahrgastes oder einer am Sitz angeordneten orthopädischen Kugelmatte könnte dann zeitweise eine falsche statische Aussage über das jeweilige Objekt abgeleitet werden.

Die Erfindung behebt diesen Effekt durch Beachtung des zeitlichen Verlaufs des rating_i. Das Prinzip der Erfindung besteht darin, die Schwankungen des rating_i bis zu einem gewissen Grad zu ignorieren, wenn vorher eine Person sicher erkannt wurde (set). Erst beim Aussteigen der Person erfolgt ein reset.

Bei Start des Fahrzeugs befindet sich das Rating im Zustand *set*=*0*. Beim Einsteigen einer Person steigt rating_i über Null, die Summe rating_1 + rating_2 wird im Idealfall (Person mit Normalgröße und Normalgewicht sitzt angelehnt und entspannt) gleich 2 (Person). Aber erst wenn das rating für eine gewisse Zeit ununterbrochen oberhalb einer gewissen Schwelle von z.B. 1,5 liegt, gilt die Person als sicher erkannt und der Zustand wird *set=1*. Das Rating kann dann, wenn die Person zunächst nicht vollkommen sitzt, noch steigen, wenn die Person sich günstiger hinsetzt. Dabei kann vorgesehen sein, den Zustand *set=1* nach Überschreiten eines größeren Schwellwerts als 1,5, z.B. des Schwellwerts von 1,75, nach einer Zeitdauer auszulösen, die kleiner ist die Zeitdauer, in der der Schwellwert 1,5 ständig überschritten ist. Der größere Schwellwert wird nur dann sicher und dauernd überschritten, wenn die Anwesenheit einer Person noch sicherer feststeht.

Der Übergang von set=1 nach set=0 (reset) erfolgt, wenn das rating für eine gewisse Zeit unterhalb einer reset-Schwelle, hier von z.B. 0,5 fällt.

Aufgrund der wesentlich stärkeren Bewegungen einer Person an der Lehne werden die set- und reset-Schwellen getrennt nach rating_lehne und rating_sitz betrachtet. Die set- und reset-Schwellen für rating_lehne und rating_sitz werden durch Versuche getrennt ermittelt und müssen nicht unbedingt gleich sein. So kann z.B. die set-Schwelle für das rating_lehne bei 1,2 liegen, die set-Schwelle für das rating_sitz jedoch bei 1,5.

Sofern auf diese Weise keine klare Aussage ermittelt werden kann, wird mit Hilfe einer völlig andersartigen Sensorik (z.B. Gewichtsbestimmung) eine Ergänzung der zur Bewertung verwendeten kapazitiven Sensorik verwendet.

Damit ergibt sich eine zuverlässige Aussage über die Art des Objekts und die im Bedarfsfall zu ergreifende Sicherheitsmaßnahme.

## Patentansprüche

1. Verfahren zur kapazitiven Objekterkennung bei Fahrzeug-Sitzen, mit einem in einem Lehnenteil und einem in einem Sitzflächenteil angeordneten Kondensator, deren Kapazitäten durch ein Objekt beeinflußt werden,
**gekennzeichnet durch** folgende Merkmale:
die Kondensatoren werden mit Wechselspannung beaufschlagt und es wird der zeitliche Verlauf ihrer Kapazitäten einzeln bestimmt,
aus den Werten jeder der beiden Kapazitäten wird anhand einer Wertetabelle eine Bewertung des Objekts abgeleitet,
bei Übereinstimmung der beiden Bewertungen hinsichtlich der Art des Objekts wird eine dem Sitz zugeordnete Insassenschutzeinrichtung bedarfsweise entsprechend aktiviert.

2. Verfahren zur kapazitiven Objekterkennung bei Fahrzeug-Sitzen, mit einem in einem Lehnenteil und einem in einem Sitzflächenteil angeordneten Kondensator, deren Kapazitäten durch ein Objekt beeinflußt werden,
**gekennzeichnet durch** folgende Merkmale:
die Kondensatoren werden mit Wechselspannung beaufschlagt und es wird der zeitliche Verlauf ihrer Kapazitäten einzeln bestimmt,
aus dem jeweiligen Wert der beiden Kapazitäten wird anhand einer Wertetabelle eine Bewertung des Objekts abgeleitet,
die beiden Bewertungen werden miteinander mathematisch in Beziehung gesetzt,
aus dem sich aufgrund der mathematischen Beziehung ergebenden Wert wird anhand einer Entscheidungstabelle abgeleitet, ob eine dem Sitz zugeordnete Insassenschutzeinrichtung bedarfsweise aktiviert wird.

3. Verfahren nach einem der Ansprüche 1 oder 2, **dadurch gekennzeichnet, daß** das Ergebnis der Entscheidung, ob die Insassenschutzeinrichtung bedarfsweise zu aktivieren ist, ebenfalls in seinem zeitlichen Verlauf untersucht wird.

4. Verfahren nach Anspruch 3, **dadurch gekennzeichnet, daß** die Entscheidung, die Insassenschutzeinrichtung bedarfsweise zu aktivieren, erst nach Ablauf einer vorgegebenen Zeit annulliert wird, in der ständig eine das Auslösen der Insassenschutzeinrichtung verhindernde Entscheidung vorliegt.

## Claims

1. A method of capacitive recognition of objects on vehicle seats, with a capacitor mounted on a back rest part and one on the seat-surface part, the capacitances being influenced by an object,
**characterised by** the following features:
the capacitors are supplied with AC voltage and the variation in time of their capacitances are individually determined,
the object is evaluated by means of each of the values of the two capacitances, using a value table, and
if the two values coincide regarding the nature of the object, an occupant-protecting device associated with the seat is activated as required.

2. A method of capacitive recognition of objects on vehicle seats, with a capacitor mounted on a back rest part and one on the seat-surface part, the capacitances being influenced by an object,
**characterised by** the following features:
the capacitors are supplied with AC voltage and the variation in time of their capacitances are individually determined,
the object is evaluated from the respective values of the two capacitances, using a value table,
the two values are mathematically related and
the value resulting from the mathematical relation is used, with a decision table, to decide whether an occupant-protecting device associated with the seat is to be actuated as required.

3. A method according to claim 1 or 2, **characterised in that** the result of the decision whether to actuate the occupant-protecting device as required is likewise examined as regard its variation in time.

4. A method according to claim 3, **characterised in that** the decision to activate the occupant-protecting device as required is cancelled only after a set time during which the decision is constantly against triggering the occupant-protecting device.

## Revendications

1. Procédé destiné à la reconnaissance capacitive d'objets sur des sièges de véhicule, comportant un condensateur disposé dans une partie d'assise et un condensateur disposé dans une partie de dossier et dont les capacités sont influencées par un objet,
**caractérisé en ce que**
les condensateurs sont alimentés par une tension alternative et leur capacité est déterminée individuellement,
on déduit à l'aide d'une table des valeurs une évaluation de l'objet sur la base des valeurs de chacune des deux capacités, et
lorsque les deux évaluations se correspondent pour ce qui est du type de l'objet, on active en cas de besoin une installation de protection des occupants associée au siège.

2. Procédé destiné à la reconnaissance capacitive d'objets sur des sièges de véhicule, comportant un condensateur disposé dans une partie d'assise et un condensateur disposé dans une partie de dossier et dont les capacités sont influencées par un objet,
**caractérisé en ce que**
les condensateurs sont alimentés par une tension alternative et leur capacité est déterminée individuellement,
on déduit à l'aide d'une table des valeurs une évaluation de l'objet à partir de la valeur respective des deux capacités,
on met mathématiquement en relation les deux évaluations l'une avec l'autre, et
en se basant sur la valeur obtenue par la relation mathématique, on déduit à l'aide d'une table de décision si on active en cas de besoin une installation de protection des occupants associée au siège.

3. Procédé selon l'une des revendications 1 ou 2,
**caractérisé en ce qu'**
on analyse également dans son déroulement dans le temps le résultat de la décision d'activer en cas de besoin l'installation de protection des occupants.

4. Procédé selon la revendication 3,
**caractérisé en ce que**
la décision d'activer en cas de besoin l'installation de protection des occupants n'est annulée qu'après que s'est écoulé un certain laps de temps prédéterminé pendant lequel est constamment disponible une décision qui empêche que l'installation de protection des occupants ne se déclenche.
